# EUROPEAN PATENT SPECIFICATION

(11) **EP 3 608 350 B1**
(45) Date of publication and mention of the grant of the patent: **24.05.2023**
(21) Application number: 18780681.5
(22) Date of filing: 26.03.2018
(51) Int. Cl.: C08G 73/10, C08J 5/18, C09D 179/08

(54) **POLYIMIDE FILM**
POLYIMIDFOLIE
FILM DE POLYIMIDE

(30) Priority: 07.04.2017 JP 2017076855
(43) Date of publication of application: 12.02.2020
(73) Proprietor: I.S.T Corporation, Otsu-shi, Shiga 520-2153 (JP)
(72) Inventor: SHIRAI Yuki, Otsu-shi Shiga 520-2153 (JP); MORIUCHI Koji, Otsu-shi Shiga 520-2153 (JP)
(74) Representative: TBK
(86) International application number: PCT/JP2018/012023
(87) International publication number: WO 2018/186215

(56) References cited:
- WO-A1-2014/148441
- WO-A1-2017/051827
- WO-A1-2017/073782
- JP-A- 2012 041 473
- JP-A- 2016 000 462
- KR-A- 20150 046 463
- KR-A- 20150 046 463

## Description

### [Technical Field]

The present invention relates to an essentially colorless and transparent polyimide film, particularly an essentially colorless and transparent polyimide film useful for optical fibers, substrates for liquid crystal display surfaces, substrates for electroluminescence, protective sheets, and the like.

### [Background of the invention]

Polyimide films generally have excellent thermal stability, electrical properties and mechanical properties and are applied to a variety of products used in relatively severe environments. Incidentally, many kinds of polyimide films are opacified due to severe heat history up to film formation or colored yellow or brown. When applied as a film substrate of a liquid crystal display device, the white-turbid polyimide film or the colored polyimide film not only darkens the field of view but also impairs the original function of the liquid crystal display device. Therefore, colorless and transparent polyimide films have been developed to solve such problems. Now, colorless and transparent polyimide films are widely used as films in liquid crystal display devices, optical fiber cable coatings, waveguides, protective coatings for solar cells, and the like (for example, see Japanese Patent Laid-Open No. S62-7733, Japanese Patent Laid-Open No. 2000-313804, Japanese Patent Laid-Open No. 2012-040836, Korean Patent Laid-Open No. 10-2015-0046463, and the like).

KR 2015-0046463 A relates to polyamic acid, polyimide, and a display device formed from the same, wherein the polyamic acid includes: 4,4'-(4,4'-isopropylidene diphenoxy)bisphthalic anhydride (HBDA), biphenyltetracarboxylic acid dianhydride (BPDA) and 2-bis(3,4-dicarboxyphenyl) propane hexafluoropropane dianhydride (6FDA) hexafluoropropane dianhydride as dianhydride; and methyl bis-trifluoromethylbenzidine (TFDB) as diamine.

### [Prior-art document]

### [Patent Document]

[Patent Document 1] Japanese Patent Laid-Open No. S62-7733
[Patent Document 2] Japanese Patent Laid-Open No. 2000-313804
[Patent Document 3] Japanese Patent Laid-Open No. 2012-040836
[Patent Document 4] Korean Patent Laid-Open No. 10-2015-0046463

### [Summary of the invention]

### [Problem to Be Solved]

However, the colorless and transparent polyimide film proposed in the past is inevitably expensive due to the high raw material cost, and has a problem that it is not accepted by the market. In addition, the conventional colorless and transparent polyimide film has a low resistance to methyl ethyl ketone used in manufacturing a flexible printed circuit board or the like, and breaks when tensile force is applied to it.

The object of the present invention is to provide a colorless and transparent polyimide film which exhibits excellent heat resistance, transparency and strength equivalent to those of the conventional colorless and transparent polyimide film, can be produced at a lower cost, and is more resistant to methyl ethyl ketone than the conventional colorless and transparent polyimide film.

### [Means for Solving the Problem]

The polyimide film according to an aspect of the present invention is made from a specific polyimide resin. Here, the polyimide film includes a film, a sheet, and a tubular body. The specific polyimide resins consist of a site derived from biphenyltetracarboxylic acid compound (BPDA), at least one site selected from the group consisting of a site derived from 2,2-bis[3,4-(dicarboxyphenoxy)phenyl]propane (BPADA)-based compound and a site derived from 4,4'-oxydiphthalic acid (ODPA)-based compound, a site derived from 2,2'-bis(trifluoromethyl)benzidine (TFMB), and, at least one site selected from the group consisting of a site derived from 3,3'-diaminodiphenylsulfone (3,3'-DDS) and a site derived from 4,4'-diaminodiphenylsulfone (4,4'-DDS). Here, the site derived from tetracarboxylic acid-based compound means a site derived from "tetracarboxylic acid" or "tetracarboxylic acid derivative such as tetracarboxylic acid dianhydride or tetracarboxylic acid diester", and the site derived from diamine means a site derived from "diamine". The film thickness of the polyimide film according to the present invention is in the range of 5 µm or more and 50 µm or less, preferably in the range of 7.5 µm or more and 40 µm or less, more preferably in the range of 10 µm or more and 30 µm or less. The haze value of the polyimide film is in the range of 0.1 or more and 2.0 or less when the thickness of the polyimide film is 25 µm. The colorless and transparent polyimide film having a haze value of 2.0 or less can stably transmit light when applied to an application such as a liquid crystal display.

The colorless and transparent polyimide film according to the present invention is formed from a polyimide precursor solution prepared using biphenyltetracarboxylic acid-based compound, at least one selected from the group consisting of 2,2-bis[3,4-(dicarboxyphenoxy)phenyl]propane-based compound and 4,4'-oxydiphthalic acid-based compound, 2,2'-bis(trifluoromethyl)benzidine, and at least one selected from the group consisting of 3,3'-diaminodiphenylsulfone and 4,4'-diaminodiphenylsulfone. The polyimide precursor solution is obtained by reacting the above-mentioned tetracarboxylic acid-based compound and the above-mentioned diamine in a polar organic solvent. When the polyimide precursor solution is prepared, the molar ratio of each tetracarboxylic acid-based compound in a plurality of types of tetracarboxylic acid-based compounds can be appropriately adjusted according to the purpose and use of the colorless and transparent polyimide film.

An organic solvent used for the preparation of the above-mentioned polyimide precursor solutions include N,N-dimethylacetamide (DMAc), N,N-dimethylformamide (DMF), N,N-diethylacetamide, N,N-diethylformamide, N-methyl-2-pyrrolidone (NMP), phenol, cresol, xylenol, resorcine, 3-chlorophenol, 4-chlorophenol, 3-bromophenol, 4-bromophenol, 2-chloro-5-hydroxytoluene, diglyme, triglyme, sulfolane, γ-butyrolactone, tetrahydrofuran, dioxolane and the like. Among these, N,N-dimethylacetamide (DMAc) is suitably used. Two or more of these solvents may be used in combination.

In addition, well-known additives such as dispersing agents, solid lubricants, precipitation inhibitors, leveling agents, surface regulators, moisture absorbers, gelation inhibitors, antioxidants, ultraviolet absorbers, light stabilizers, plasticizers, skin coating inhibitors, surfactants, antistatic agents, antifoaming agents, antimicrobial agents, fungicides, preservatives, thickeners and the like may be added to the above-mentioned polyimide precursor solution within a range that does not impair the essence of the present invention.

The colorless and transparent polyimide film according to the present invention is obtained by forming a coating film from the above-mentioned polyimide precursor solution and imidizing the coating film.

In the specific polyimide resins of the above-mentioned polyimide film, the molar fraction of the site derived from biphenyltetracarboxylic acid compound (BPDA) with respect to all the sites derived from tetracarboxylic acid compound is preferably within the range of 70 mol% or more and 99 mol% or less, more preferably within the range of 80 mol% or more and 97.5 mol% or less, and more preferably within the range of 90 mol% or more and 95 mol% or less. This is because the polyimide film in which the molar fraction of the site derived from biphenyltetracarboxylic acid compound (BPDA) to the site derived from tetracarboxylic acid compound is 50 mol% or more has a high glass transition temperature and can retain sufficient heat resistance when soldering or the like is performed at the time of manufacturing a liquid crystal display, a flexible printed circuit board, or the like.

The site derived from biphenyltetracarboxylic acid-based compound (BPDA) is formed from biphenyltetracarboxylic acid-based compound (BPDA), and the biphenyltetracarboxylic acid-based compound (BPDA) includes "biphenyltetracarboxylic acid" or "biphenyltetracarboxylic acid derivative such as biphenyltetracarboxylic acid dianhydride or biphenyltetracarboxylic acid diester". The biphenyltetracarboxylic acid can be obtained by hydrolyzing biphenyltetracarboxylic acid dianhydride by a known method, and the biphenyltetracarboxylic acid diester can be obtained by diestering biphenyltetracarboxylic acid dianhydride by a known method.

Further, in the specific polyimide resins forming the above-mentioned polyimide film, the molar fraction of at least one site selected from the group consisting of the site derived from 2,2-bis[3,4-(dicarboxyphenoxy)phenyl]propane (BPADA)-based compound and the site derived from 4,4'-oxydiphthalic acid (ODPA)-based compound with respect to all the sites derived from tetracarboxylic acid-based compound is preferably within the range of 1 mol% or more and 30 mol% or less, more preferably within the range of 2.5 mol% or more and 20 mol% or less, and still more preferably within the range of 5 mol% or more and 10 mol% or less. This is because the polyimide film made of such a specific polyimide resin has an extremely low degree of white turbidity and can maintain high transparency.

The site derived from 2,2-Bis[3,4-(dicarboxyphenoxy)phenyl]propane (BPADA) is formed from 2,2-bis[3,4-(dicarboxyphenoxy)phenyl]propane-based compounds and the site derived from 4,4'-oxydiphthalate (ODPA) is formed from 4,4'-oxydiphthalate-based compound, but "2,2-bis[3,4-(dicarboxyphenoxy)phenyl]propane" or "2,2-Bis[3,4-(dicarboxyphenoxy)phenyl]propane derivatives such as 2,2-bis[3,4-(dicarboxyphenoxy)phenyl]propane dianhydride and 2,2-bis[3,4-(dicarboxyphenoxy)phenyl]propane diester" are examplified as 2,2-bis[3,4-(dicarboxyphenoxy)phenyl]propane (BPADA)-based compound, "4,4'-oxydiphthalic acid" or "4,4'-oxydiphthalic acid derivatives such as 4,4'-oxydiphthalic acid dianhydride and 4,4'-oxydiphthalic acid diesters"" are exemplified as 4,4'-oxydiphthalate-based compound, the aromatic tetracarboxylic acid dianhydride is hydrolyzed by a known method to obtain an aromatic tetracarboxylic acid, and the aromatic tetracarboxylic acid dianhydride is diestered by a known method to obtain an aromatic tetracarboxylic acid diester.

Further, in the specific polyimide resins of the above-mentioned polyimide film, the molar fraction of the site derived from 2,2'-bis(trifluoromethyl)benzidine (TFMB) with respect to all the sites derived from diamine is preferably within the range of 40 mol% or more and 98 mol% or less, more preferably within the range of 50 mol% or more and 95 mol% or less, and still more preferably within the range of 60 mol% or more and 90 mol% or less. This is because a polyimide film made from such a specific polyimide resin can exhibit excellent transparency.

Further, in the specific polyimide resins forming the above-mentioned polyimide film, the molar fraction of at least one site selected from the group consisting of the site derived from 3,3'-diaminodiphenylsulfone (3,3'-DDS) and the site derived from 4,4'-diaminodiphenylsulfone (4,4'-DDS) with respect to all the sites derived from diamine is preferably within the range of 2 mol% or more and 60 mol% or less, more preferably within the range of 5 mol% or more and 50 mol% or less, and still more preferably within the range of 10 mol% or more and 40 mol% or less. This is because a polyimide film made of such a specific polyimide resin has a low raw material cost.

The above-mentioned polyimide film preferably has a tensile strength in the range of 100 MPa or more and 500 MPa or less.

The glass transition temperature of the specific polyimide resin of the above-mentioned polyimide film is preferably in the range of 260°C or more and 350°C or less. If the glass transition temperature of the polyimide film could be 260°C or more, when a mounted component is soldered to a flexible printed circuit board or the like in case that the polyimide film is incorporated in a flexible printed circuit board or the like, it is possible to prevent deterioration of physical properties of the flexible printed circuit board or the like because the polyimide film has sufficient heat resistance.

The above-mentioned polyimide film preferably has a tensile elongation of 3.5% or more and 35% or less when one side surface is wetted with methyl ethyl ketone (MEK), more preferably 5.0% or more and 25% or less. This is because the polyimide film does not break when the copper foil is attached to the polyimide film in manufacture of the flexible printed circuit board or the like due to such physical properties of the polyimide film.

The total light transmittance of the above-mentioned polyimide film is preferably 80% or more, more preferably 85% or more, and still more preferably 90% or more when the thickness of the polyimide film is 25 µm.

The yellowness index of the polyimide film is preferably 8.0 or less, more preferably 6.0 or less, and still more preferably 4.0 or less when the thickness of the polyimide film is 25 µm.

### DETAILED DESCRIPTION OF THE INVENTION

Hereinafter, the polyimide film according to the present invention will be described in detail using working examples.

### WORKING EXAMPLE 1

### 1. Preparation of polyimide precursor solution

18.86 g of biphenyltetracarboxylic dianhydride (BPDA), 0.34 g of 2,2-bis[3,4-(dicarboxyphenoxy)phenyl]propane dianhydride (BPADA), 20.32 g of 2,2'-bis(trifluoromethyl)benzidine (TFMB), and 0.32 g of 4,4'-diaminodiphenylsulfone (4,4'-DDS) were reacted in 110.17 g of N,N-dimethylacetamide (DMAc) to prepare a polyimide-precursor solution having 20 wt% solid content. In this case, the molar fractions of BPDA and BPADA with respect to all the tetracarboxylic dianhydrides were 99 mol% and 1 mol%, respectively, and the molar fractions of TFMB and 4,4'-DDS with respect to all the diamines were 98 mol% and 2 mol%, respectively.

### 2. Preparation of polyimide film

The above-mentioned polyimide precursor solution was applied onto a glass substrate to form a coating film, and then the coating film was placed in an oven at 70°C, and after 20 minutes had elapsed, the oven was heated to 120°C. At this time, it took 20 minutes for the temperature of the oven to reach from 70°C to 120°C. After the temperature of the oven reached 120°C, the temperature was maintained for 20 minutes, after which the oven was raised to 300°C. At this time, it took 39 minutes for the temperature of the oven to reach from 120°C to 300°C. After the oven temperature reached 300°C, the temperature was maintained for 5 minutes. As a result, a polyimide film having a thickness of 25 µm was formed on the glass substrate. Then, the polyimide film on the glass substrate was peeled off from the glass substrate to obtain a target polyimide film.

### 3. Measurement of Physical Properties of Polyimide Films

The haze value, total light transmittance, tensile strength (in a dry state), tensile elongation in a wet state with methyl ethyl ketone, and glass transition temperature of the obtained polyimide film were determined as follows.

### (1) Haze value and total light transmittance of polyimide film

The haze value and the total light transmittance of the polyimide film were measured on the basis of the old JIS K7105 using a haze meter (HGM-2DP) manufactured by Suga Tester, and the haze value was 0.4% and the total light transmittance was 90.5%. At this time, the b* values and the Yellowness index were also measured at the same time. The b* was 2.4 and the yellowness index was 4.0.

### (2) Tensile strength of polyimide film

The tensile strength of the polyimide film was measured at a tensile rate of 50 mm/min using an autograph AGS-10kNG manufactured by Shimadzu Corporation, and the tensile strength was 200 MPa. At this time, the tensile elastic modulus and the tensile elongation were also measured at the same time. The tensile modulus was 4.4 GPa and the tensile elongation 21.3%.

### (3) Tensile Elongation of Polyimide Film in a Wet State with Methyl Ethyl Ketone

After setting a polyimide film on a chuck of an autograph AGS-10kNG manufactured by Shimadzu Corporation, one side entire surface of the polyimide film was wetted with methyl ethyl ketone, and then the polyimide film was pulled at a tensile rate of 50 mm/min, and when the tensile elongation (elongation at break) at that time was measured, the tensile elongation was 17.8%.

### (4) Glass transition temperature of the polyimide film

The glass transition temperature of the polyimide film was measured using a dynamic viscoelastic device (DM6100) manufactured by Seiko Instruments, Inc. under the following conditions, and the glass transition temperature was 347°C

### - Measurement conditions -

Measurement Environment: Under Atmospherics
Film size: 30 mm long × 8 mm wide
Sinusoidal load: amplitude 98 mN, frequency 1.0 Hz
Temperature elevation rate: 2°C/min

From the above results, it was confirmed that the polyimide film obtained in this working example exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 2]

A polyimide precursor solution (solid content: 20 wt %) was prepared in the same manner as in the working example 1, except that the additive amount of BPDA was changed to 18.53 g, the additive amount of BPADA was changed to 0.84 g, the additive amount of TFMB was changed to 19.65 g, and the additive amount of 4,4'-DDS added was changed to 0.80 g, and a polyimide film was prepared in the same manner as in the working example 1. In this case, the molar fractions of BPDA and BPADA with respect to all the tetracarboxylic dianhydrides were 97.5 mol% and 2.5 mol%, respectively, and the molar fractions of TFMB and 4,4'-DDS with respect to all the diamines were 95 mol% and 5 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.5%, the total light transmittance was 90.5%, the tensile strength was 175 MPa, the tensile elongation in a wet state with methyl ethyl ketone was 15.2%, and the glass transition temperature was 342°C. The tensile modulus measured simultaneously with the tensile strength was 4.1 GPa, and the tensile elongation was 20.0%. In addition, the b* value measured simultaneously with the haze value and the total light transmittance was 2.4 and the yellowness index was 3.9.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 3]

A polyimide precursor solution (solid content: 20 wt %) was prepared in the same manner as in the working example 1, except that the additive amount of BPDA was changed to 14.39 g, the additive amount of BPADA was changed to 1.34 g, the additive amount of TFMB was changed to 14.84 g, the additive amount of 4,4'-DDS was changed to 1.28 g, and the additive amount of DMAc was changed to 118.15 g, and a polyimide film was prepared in the same manner as in the working example 1. In this case, the molar fractions of BPDA and BPADA with respect to all the tetracarboxylic dianhydrides were 95 mol% and 5 mol%, respectively, and the molar fractions of TFMB and 4,4'-DDS with respect to all the diamines were 90 mol% and 10 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.6%, the total light transmittance was 90.4%, the tensile strength was 156 MPa, the tensile elongation in a wet state with methyl ethyl ketone was 8.9%, and the glass transition temperature was 335°C. The tensile modulus measured simultaneously with the tensile strength was 4.3 GPa, and the tensile elongation was 14.1%. Furthermore, the b* value measured simultaneously with the haze value and the total light transmittance was 2.3 and the yellowness index was 3.9.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 4]

A polyimide precursor solution (solid content: 20 wt %) was prepared in the same manner as in the working example 1, except that the additive amount of BPDA was changed to 13.54 g, the additive amount of BPADA was changed to 2.66 g, the additive amount of TFMB was changed to 13.10 g, the additive amount of 4, 4'-DDS was changed to 2.54 g, and the additive amount of DMAc was changed to 118.16 g, and a polyimide film was prepared in the same manner as in the working example 1. In this case, the molar fractions of BPDA and BPADA with respect to all the tetracarboxylic dianhydrides were 90 mol% and 10 mol%, respectively, and the molar fractions of TFMB and 4,4'-DDS with respect to all the diamines were 80 mol% and 20 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.5%, the total light transmittance was 90.3%, the tensile strength was 143 MPa, the tensile elongation in a wet state with methyl ethyl ketone was 5.1%, and the glass transition temperature was 328°C. The tensile modulus measured simultaneously with the tensile strength was 4.0 GPa, and the tensile elongation was 9.2%. In addition, the b* value measured simultaneously with the haze value and the total light transmittance was 2.4 and the yellowness was 4.0.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 5]

A polyimide precursor solution (solid content: 20 wt %) was prepared in the same manner as in the working example 1, except that 4,4'-DDS was changed to 3,3'-DDS, and a polyimide film was prepared in the same manner as in the working example 1. In this case, the molar fractions of BPDA and BPADA with respect to all the tetracarboxylic dianhydrides were 99 mol% and 1 mol%, respectively, and the molar fractions of TFMB and 3,3'-DDS with respect to all the diamines were 98 mol% and 2 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.7%, the total light transmittance was 90.5%, the tensile strength was 207 MPa, the tensile elongation in a wet state with methyl ethyl ketone was 20.7%, and the glass transition temperature was 339°C. The tensile modulus measured simultaneously with the tensile strength was 4.4 GPa, and the tensile elongation was 22.0%. Furthermore, the b* value measured simultaneously with the haze value and the total light transmittance were 1.9 and the yellowness index was 3.6.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 6]

The polyimide precursor solution (solids: 20 wt%) was prepared in the same manner as in the working example 1, except that the additive amount of BPDA was changed to 18.53 g, the additive amount of BPADA was changed to 0.84 g, the additive amount of TFMB was changed to 19.65 g, and 0.32 g of 4,4'-DDS was changed to 0.80 g of 3,3'-DDS, and a polyimide film was prepared in the same manner as in the working example 1. In this case, the molar fractions of BPDA and BPADA with respect to all the tetracarboxylic dianhydrides were 97.5 mol% and 2.5 mol%, respectively, and the molar fractions of TFMB and 3,3'-DDS with respect to all the diamines were 95 mol% and 5 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.6%, the total light transmittance was 90.4%, the tensile strength was 176 MPa, the tensile elongation in a wet state with methyl ethyl ketone was 17.9%, and the glass transition temperature was 323°C. The tensile modulus measured simultaneously with the tensile strength was 4.2 GPa, and the tensile elongation was 20.0%. Furthermore, the b* value measured simultaneously with the haze value and the total light transmittance was 2.0 and the yellowness index was 3.7.

From the above results, it was confirmed that the polyimide film obtained in this woking example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 7]

A polyimide precursor solution (solid content: 20 wt %) was prepared in the same manner as in the working example 1, except that the additive amount of BPDA was changed to 14.39 g, the additive amount of BPADA was changed to 1.34 g, the additive amount of TFMB was changed to 14.84 g, 0.32 g of 4,4'-DDS was changed to 1.28 g of 3,3'-DDS, and the additive amount of DMAc was changed to 118.15 g, and a polyimide film was prepared in the same manner as in the working example 1. In this case, the molar fractions of BPDA and BPADA with respect to all the tetracarboxylic dianhydrides were 95 mol% and 5 mol%, respectively, and the molar fractions of TFMB and 3,3'-DDS with respect to all the diamines were 90 mol% and 10 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.6%, the total light transmittance was 90.4%, the tensile strength was 180 MPa, the tensile elongation in a wet state with methyl ethyl ketone was 12.5%, and the glass transition temperature was 312°C. The tensile modulus measured simultaneously with the tensile strength was 4.4 GPa, and the tensile elongation was 16.6%. Furthermore, the b* value measured simultaneously with the haze value and the total light transmittance were 1.9 and the yellowness index was 3.6.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 8]

A polyimide precursor solution (solid content: 20 wt %) was prepared in the same manner as in the working example 1, except that the additive amount of BPDA was changed to 13.54 g, the additive amount of BPADA was changed to 2.66 g, the additive amount of TFMB was changed to 13.10 g, 0.32 g of 4,4'-DDS was changed to 2.54 g of 3,3'-DDS, and the additive amount of DMAc was changed to 118.16 g, and a polyimide film was prepared in the same manner as in the working example 1. In this case, the molar fractions of BPDA and BPADA with respect to all the tetracarboxylic dianhydrides were 90 mol% and 10 mol%, respectively, and the molar fractions of TFMB and 3,3'-DDS with respect to all the diamines were 80 mol% and 20 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.5%, the total light transmittance was 90.6%, the tensile strength was 184 MPa, the tensile elongation in a wet state with methyl ethyl ketone was 8.2%, and the glass transition temperature was 297°C. The tensile modulus measured simultaneously with the tensile strength was 4.3 GPa, and the tensile elongation was 27.4%. Furthermore, the b* value measured simultaneously with the haze value and the total light transmittance were 2.2 and the yellowness index was 3.8.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 9]

A polyimide precursor solution (solid content: 20 wt %) was prepared in the same manner as in the working example 1, except that the additive amount of BPDA was changed to 12.70 g, the additive amount of BPADA was changed to 3.97 g, the additive amount of TFMB was changed to 11.38 g, 0.32 g of 4,4'-DDS was changed to 3.78 g of 3,3'-DDS, and the additive amount of DMAc was changed to 118.17 g, and a polyimide film was prepared in the same manner as in the working example 1. In this case, the molar fractions of BPDA and BPADA with respect to all the tetracarboxylic dianhydrides were 85 mol% and 15 mol%, respectively, and the molar fractions of TFMB and 3,3'-DDS with respect to all the diamines were 70 mol% and 30 mol%, respectively. The film thickness of the obtained polyimide film was 24 µm.

When the haze value, total light transmittance, tensile strength, and glass transition temperature of the obtained polyimide film were measured in the same manner as in the working example 1, the haze value was 0.6%, the total light transmittance was 90.5%, the tensile strength was 164 MPa, the tensile elongation in a wet state with methyl ethyl ketone was 7.9%, and the glass transition temperature was 290°C. The tensile modulus measured simultaneously with the tensile strength was 4.1 GPa, and the tensile elongation was 25.8%. Furthermore, the b* value measured simultaneously with the haze value and the total light transmittance was 2.2 and the yellowness index was 4.0.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional and colorless and transparent polyimide film.

### [WORKING EXAMPLE 10]

A polyimide precursor solution (solid content: 20 wt%) was prepared in the same manner as in the working example 1, except that the additive amount of BPDA was changed to 13.42 g, 0.34 g of BPADA was changed to 2.50 g of 5,5'-oxybis (isobenzofuran-1,3-dione) (ODPA), and the additive amount of TFMB was changed to 12.03 g, 0.32 g of 4,4'-DDS was changed to 4.00 g of 3,3'-DDS, and the additive amount of DMAc was changed to 118.07 g, and a polyimide film was prepared in the same manner as in the working example 1. In this case, the molar fractions of BPDA and ODPA with respect to all the tetracarboxylic dianhydrides were 85 mol% and 15 mol%, respectively, and the molar fractions of TFMB and 3,3'-DDS with respect to all the diamines were 70 mol% and 30 mol%, respectively. The film thickness of the obtained polyimide film was 24 µm.

When the haze value, total light transmittance, tensile strength, and glass transition temperature of the obtained polyimide film were measured in the same manner as in the working example 1, the haze value was 0.8%, the total light transmittance was 90.3%, the tensile strength was 209 MPa, the tensile elongation in a wet state with methyl ethyl ketone was 14.8%, and the glass transition temperature was 297°C. The tensile modulus measured simultaneously with the tensile strength was 4.2 GPa, and the tensile elongation was 27.0%. Furthermore, the b* value measured simultaneously with the haze value and the total light transmittance was 4.0 and the yellowness index was 7.4.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 11]

A polyimide precursor solution (solid content: 20 wt %) was prepared in the same manner as in the working example 1, except that the additive amount of BPDA was changed to 11.87 g, the additive amount of BPADA was changed to 5.25 g, the additive amount of TFMB was changed to 9.69 g, 0.32 g of 4,4'-DDS was changed to 5.01 g of 3,3'-DDS, and the additive amount of DMAc was changed to 118.18 g, and a polyimide film was prepared in the same manner as in the working example 1. In this case, the molar fractions of BPDA and BPADA with respect to all the tetracarboxylic dianhydrides were 80 mol% and 20 mol%, respectively, and the molar fractions of TFMB and 3,3'-DDS with respect to all the diamines were 60 mol% and 40 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.5%, the total light transmittance was 90.5%, the tensile strength was 155 MPa, the tensile elongation in a wet state with methyl ethyl ketone was 6.2%, and the glass transition temperature was 281°C. The tensile modulus measured simultaneously with the tensile strength was 4.0 GPa, and the tensile elongation was 25.2%. Furthermore, the b* value measured simultaneously with the haze value and the total light transmittance was 2.3 and the yellowness index was 4.1.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 12]

A polyimide precursor solution (solid content: 20 wt %) was prepared in the same manner as in the working example,1, except that the additive amount of BPDA was changed to 12.77 g, 0.34 g of BPADA was changed to 3.37 g of ODPA, the additive amount of TFMB was changed to 10.43 g, 0.32 g of 4,4'-DDS was changed to 5.39 g of 3, 3'-DDS, and the additive amount of DMAc was changed to 118.05 g, and a polyimide film was prepared in the same manner as in the working example 1. In this case, the molar fractions of BPDA and ODPA with respect to all the tetracarboxylic dianhydrides were 80 mol% and 20 mol%, respectively, and the molar fractions of TFMB and 3,3'-DDS with respect to all the diamines were 60 mol% and 40 mol%, respectively. The film thickness of the obtained polyimide film was 24 µm.

When the haze value, total light transmittance, tensile strength, and glass transition temperature of the obtained polyimide film were measured in the same manner as in the working example 1, the haze value was 0.7%, the total light transmittance was 90.4%, the tensile strength was 177 MPa, the tensile elongation in a wet state with methyl ethyl ketone was 12.1%, and the glass transition temperature was 293°C. The tensile modulus measured simultaneously with the tensile strength was 4.1 GPa, and the tensile elongation was 24.3%. Furthermore, the b* value measured simultaneously with the haze value and the total light transmittance was 4.2 and the yellowness index was 7.6.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 13]

A polyimide precursor solution (solid content: 20 wt %) was prepared in the same manner as in the working example 1, except that the additive amount of BPDA was changed to 11.05 g, the additive amount of BPADA was changed to 6.52 g, the additive amount of TFMB was changed to 8.02 g, 0.32 g of 4,4'-DDS was changed to 6.22 g of 3,3'-DDS, and the additive amount of DMAc was changed to 118.20 g, and a polyimide film was prepared in the same manner as in the working example 1. In this case, the molar fractions of BPDA and BPADA with respect to all the tetracarboxylic dianhydrides were 75 mol% and 25 mol%, respectively, and the molar fractions of TFMB and 3,3'-DDS with respect to all the diamines were 50 mol% and 50 mol%, respectively. The film thickness of the obtained polyimide film was 24 µm.

When the haze value, total light transmittance, tensile strength, and glass transition temperature of the obtained polyimide film were measured in the same manner as in the working example 1, the haze value was 0.5%, the total light transmittance was 90.4%, the tensile strength was 140 MPa, the tensile elongation in a wet state with methyl ethyl ketone was 4.1%, and the glass transition temperature was 275°C. The tensile modulus measured simultaneously with the tensile strength was 3.6 GPa, and the tensile elongation was 10.2%. Furthermore, the b* value measured simultaneously with the haze value and the total light transmittance was 1.7 and the yellowness index was 2.8.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 14]

A polyimide precursor solution (solid content: 20 wt %) was prepared in the same manner as in the working example 1, except that the additive amount of BPDA was changed to 10.01 g, the additive amount of BPADA was changed to 7.59 g, the additive amount of TFMB was changed to 9.33 g, 0.32 g of 4,4'-DDS was changed to 4.83 g of 3,3'-DDS, and the additive amount of DMAc was changed to 118.25 g, and a polyimide film was prepared in the same manner as in the working example 1. In this case, the molar fractions of BPDA and BPADA with respect to all the tetracarboxylic dianhydrides were 70 mol% and 30 mol%, respectively, and the molar fractions of TFMB and 3,3'-DDS with respect to all the diamines were 60 mol% and 40 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.4%, the total light transmittance was 90.4%, the tensile strength was 137 MPa, the tensile elongation in a wet state with methyl ethyl ketone was 3.8%, and the glass transition temperature was 269°C. The tensile modulus measured simultaneously with the tensile strength was 3.3 GPa, and the tensile elongation was 9.0%. Furthermore, the b* value measured simultaneously with the haze value and the total light transmittance was 1.6 and the yellowness index was 2.6.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 15]

A polyimide precursor solution (solid content: 20 wt %) was prepared in the same manner as in the working example 1, except that the additive amount of BPDA was changed to 10.24 g, the additive amount of BPADA was changed to 7.77 g, the additive amount of TFMB was changed to 6.37 g, 0.32 g of 4,4'-DDS was changed to 7.41 g of 3,3'-DDS, and the additive amount of DMAc was changed to 118.21 g, and a polyimide film was prepared in the same manner as in the working example 1. In this case, the molar fractions of BPDA and BPADA with respect to all the tetracarboxylic dianhydrides were 70 mol% and 30 mol%, respectively, and the molar fractions of TFMB and 3,3'-DDS with respect to all the diamines were 40 mol% and 60 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.6%, the total light transmittance was 90.3%, the tensile strength was 129 MPa, the tensile elongation in a wet state with methyl ethyl ketone was 3.5%, and the glass transition temperature was 272°C. The tensile modulus measured simultaneously with the tensile strength was 3.3 GPa, and the tensile elongation was 8.4%. Furthermore, the b* value measured simultaneously with the haze value and the total light transmittance was 1.7 and the yellowness index was 2.7.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### [WORKING EXAMPLE 16]

The polyimide precursor solution (solids: 20 wt%) was prepared as in the working example 1, except that the additive amount of BPDA was changed to 46.887 g, 0.34 g of BPADA was changed to 4.365 g of ODPA, the additive amount of TFMB was changed to 48.348 g, the additive amount of 4,4'-DDS was changed to 4.163 g, and the additive amount of DMAc was changed to 287.090 g and the polyimide film was prepared in the same manner as in the working example 1. In this case, the molar fractions of BPDA and ODPA with respect to all the tetracarboxylic dianhydrides were 95 mol% and 5 mol%, respectively, and the molar fractions of TFMB and 4,4'-DDS with respect to all the diamines were 90 mol% and 10 mol%, respectively. The film thickness of the obtained polyimide film was 25 µm.

When the haze value, total light transmittance, tensile strength, and glass transition temperature of the obtained polyimide film were measured in the same manner as in the working example 1, the haze value was 0.7%, the total light transmittance was 90.5%, the tensile strength was 155 MPa, the tensile elongation in a wet state with methyl ethyl ketone was 7.1%, and the glass transition temperature was 342°C. The tensile modulus measured simultaneously with the tensile strength was 4.3 GPa, and the tensile elongation was 15.5%. Furthermore, the b* value measured simultaneously with the haze value and the total light transmittance was 2.9 and the yellowness index was 5.1.

From the above results, it was confirmed that the polyimide film obtained in this working example also exhibited excellent heat resistance, transparency, and strength equivalent to those of the conventional colorless and transparent polyimide film, and exhibited higher resistance to methyl ethyl ketone than the conventional colorless and transparent polyimide film.

### (COMPARATIVE EXAMPLE 1)

A polyimide precursor solution (solid content: 20 wt %) was prepared in the same manner as in the working example 1, except that BPADA and 4,4'-DDS were not added, the additive amount of BPDA was changed to 15.26 g, the additive amount of TFMB was changed to 16.61 g, and the additive amount of DMAc was changed to 118.13 g, and a polyimide film was prepared in the same manner as in the working example 1. The film thickness of the obtained polyimide film was 25 µm.

When the haze value, total light transmittance, tensile strength, and glass transition temperature of the obtained polyimide film were measured in the same manner as in the working example 1, the haze value was 7.0%, the total light transmittance was 87.2%, the tensile strength was 203 MPa, the tensile elongation in a wet state with methyl ethyl ketone was 20.4%, and the glass transition temperature was 335°C. The tensile modulus measured simultaneously with the tensile strength was 4.3 GPa, and the tensile elongation was 20.2%. Furthermore, the b* value measured simultaneously with the haze value and the total light transmittance was 3.0 and the yellowness index was 5.2.

From the above results, it was revealed that the polyimide film obtained in this comparative example exhibited excellent heat resistance and strength equivalent to those of the conventional colorless and transparent polyimide film, and was higher in resistance to methyl ethyl ketone than the conventional colorless and transparent polyimide film, but was remarkably poor in transparency.

### (COMPARATIVE EXAMPLE 2)

A polyimide precursor solution (solid content: 20 wt %) was prepared in the same manner as in the working example 1, except that BPDA and 4,4'-DDS were not added, the additive amount of BPADA was changed to 19.41 g, the additive amount of TFMB was changed to 11.94 g, and the additive amount of DMAc was changed to 118.66 g, and a polyimide film was prepared in the same manner as in the working example 1. The film thickness of the obtained polyimide film was 24 µm.

When the haze value, total light transmittance, tensile strength, and glass transition temperature of the obtained polyimide film were measured in the same manner as in the working example 1, the haze value was 0.9%, the total light transmittance was 90.4%, the tensile strength was 158 MPa, the tensile elongation in a wet state with methyl ethyl ketone was 2.6%, and the glass transition temperature was 242°C. The tensile modulus measured simultaneously with the tensile strength was 3.8 GPa, and the tensile elongation was 34.1%. Furthermore, the b* value measured simultaneously with the haze value and the total light transmittance was 1.8 and the yellowness index was 3.5.

From the above results, it was revealed that the polyimide film obtained in this comparative example exhibits excellent transparency and strength equivalent to those of the conventional colorless and transparent polyimide film, but exhibits not only inferior heat resistance but also methyl ethyl ketone resistance equivalent to that of the conventional colorless and transparent polyimide film.

### (COMPARATIVE EXAMPLE 3)

A polyimide precursor solution (solid content: 20 wt %) was prepared in the same manner as in the working example 1, except that BPADA was not added, the additive amount of BPD was changed to 15.85 g, the additive amount of TFMB was changed to 12.08 g, 0.32 g of 4,4'-DDS was changed to 4.01 g of 3,3'-DDS, and the additive amount of DMAc was changed to 118.06 g, and a polyimide film was prepared in the same manner as in the working example 1. The film thickness of the obtained polyimide film was 24 µm.

When the haze value, total light transmittance, tensile strength, and glass transition temperature of the obtained polyimide film were measured in the same manner as in the working example 1, the haze value was 7.5%, the total light transmittance was 85.8%, the tensile strength was 162 MPa, the tensile elongation in a wet state with methyl ethyl ketone was 8.1%, and the glass transition temperature was 300°C. The tensile modulus measured simultaneously with the tensile strength was 4.3 GPa, and the tensile elongation was 21.2%. Furthermore, the b* value measured simultaneously with the haze value and the total light transmittance was 3.1 and the yellowness index was 5.6.

From the above results, it was revealed that the polyimide film obtained in this comparative example exhibited excellent heat resistance and strength equivalent to those of the conventional colorless and transparent polyimide film, and was higher in resistance to methyl ethyl ketone than the conventional colorless and transparent polyimide film, but was remarkably poor in transparency.

### (COMPARATIVE EXAMPLE 4)

### 1. Preparation of polyimide precursor solution

After 293.140 g of DMAc was poured into a vessel in a nitrogen-atmosphere, 35.870 g of TFMB was dissolved in the DMAc. After 6.950 g of 3,3'-DDS was added thereto and dissolved in DMAc, 21.861 g of BPADA was further added thereto and dissolved in DMAc and reacted at room temperature for 1 hour. Thereafter, 20.595 g of BPDA was further added thereto and dissolved in DMAc to react for 1 hour. Thereafter, 12.440 g of 5,5'-(hexafluoroisopropylidene)bis(1,3-isobenzoflangeon) (6FDA) was added thereto and reacted for 18 hours to obtain polyimide precursor solution.

### 2. Preparation of polyimide film

The above-mentioned polyimide precursor solution was applied onto a stainless steel plate to form a coating film, and then the coating film was heated by hot air at 80°C for 30 minutes, at 150°C for 30 minutes, at 250°C for 30 minutes, and at 300°C for 30 minutes, and then the coating film was gradually cooled. As a result, a polyimide film having a thickness of 25 µm was formed on the stainless steel plate. Then, the polyimide film on the stainless steel plate was peeled off from the stainless steel plate to obtain a target polyimide film.

### 3. Measurement of Physical Properties of Polyimide Film

When the haze value, total light transmittance, tensile strength, and glass transition temperature of the obtained polyimide film were measured in the same manner as in the working example 1, the haze value was 0.9%, the total light transmittance was 89.0%, the tensile strength was 128 MPa, the tensile elongation in a wet state with methyl ethyl ketone was 3.3%, and the glass transition temperature was 272°C. The tensile modulus measured simultaneously with the tensile strength was 3.2 GPa, and the tensile elongation was 5.9%. Furthermore, the b* value measured simultaneously with the haze value and the total light transmittance were 1.6 and the yellowness was 2.8.

From the above results, it was revealed that the polyimide film obtained in this comparative example exhibited excellent transparency, strength and heat resistance equivalent to those of the conventional colorless and transparent polyimide film, but exhibited only methyl ethyl ketone resistance equivalent to that of the conventional colorless and transparent polyimide film.

### (COMPARATIVE EXAMPLE 5)

### 1. Preparation of polyimide precursor solution

After 293.140 g of DMAc was poured into a vessel in a nitrogen-atmosphere, 35.870 g of TFMB was dissolved in the DMAc. After 6.950 g of 4,4'-DDS was added thereto and dissolved in DMAc, 21.861 g of BPADA was further added thereto and dissolved in DMAc and reacted at room temperature for 1 hour. Thereafter, 20.595 g of BPDA was further added thereto and dissolved in DMAc to react for 1 hour. Thereafter, 12.440 g of 6FDA was added thereto and reacted for 18 hours to obtain polyimide-precursor solution.

### 2. Preparation of polyimide film

Using the above-mentioned polyimide precursor solution, a polyimide film was prepared in the same manner as in the comparative example 4. The film thickness of the obtained polyimide film was 25 µm.

### 3. Measurement of Physical Properties of Polyimide Film

When the haze value, total light transmittance, tensile strength, and glass transition temperature of the obtained polyimide film were measured in the same manner as in the working example 1, the haze value was 0.6%, the total light transmittance was 88.7%, the tensile strength was 129 MPa, the tensile elongation in a wet state with methyl ethyl ketone was 2.9%, and the glass transition temperature was 288°C. The tensile modulus measured simultaneously with the tensile strength was 3.3 GPa, and the tensile elongation was 12.3%. Furthermore, the b* value measured simultaneously with the haze value and the total light transmittance were 2.2 and the yellowness index was 3.8.

From the above results, it was revealed that the polyimide film obtained in this comparative example exhibited excellent transparency, strength and heat resistance equivalent to those of the conventional colorless and transparent polyimide film, but exhibited only methyl ethyl ketone resistance equivalent to that of the conventional colorless and transparent polyimide film.

### (COMPARATIVE EXAMPLE 6)

### 1. Preparation of polyimide precursor solution

After 299.080 g of DMAc was poured into a vessel in a nitrogen-atmosphere, 35.870 g of TFMB was dissolved in the DMAc. After 6.950 g of 3,3'-DDS was added thereto and dissolved in DMAc, 7.287 g of BPADA was further added thereto and dissolved in DMAc and reacted at room temperature for 1 hour. Thereafter, 16.476 g of BPDA was further added thereto and dissolved in DMAc to react for 1 hour. Thereafter, 31.103 g of 6FDA was added thereto and reacted for 18 hours to obtain polyimide precursor solution.

### 2. Preparation of polyimide film

Using the above-mentioned polyimide precursor solution, a polyimide film was prepared in the same manner as in the comparative example 4. The film thickness of the obtained polyimide film was 25 µm.

### 3. Measurement of Physical Properties of Polyimide Film

When the haze value, total light transmittance, tensile strength, and glass transition temperature of the obtained polyimide film were measured in the same manner as in the working example 1, the haze value was 0.7%, the total light transmittance was 89.4%, the tensile strength was 139 MPa, the tensile elongation in a wet state with methyl ethyl ketone was 3.1%, and the glass transition temperature was 297°C. The tensile modulus measured simultaneously with the tensile strength was 3.5 GPa, and the tensile elongation was 5.9%. Furthermore, the b* value measured simultaneously with the haze value and the total light transmittance was 1.7 and the yellowness index was 3.1.

From the above results, it was revealed that the polyimide film obtained in this comparative example exhibited excellent transparency, strength and heat resistance equivalent to those of the conventional colorless and transparent polyimide film, but exhibited only methyl ethyl ketone resistance equivalent to that of the conventional colorless and transparent polyimide film.

### (COMPARATIVE EXAMPLE 7)

### 1. Preparation of polyimide precursor solution

After 299.080 g of DMAc was poured into a vessel in a nitrogen-atmosphere, 35.870 g of TFMB was dissolved in the DMAc. After 6.950 g of 4,4'-DDS was added thereto and dissolved in DMAc, 7.287 g of BPADA was further added thereto and dissolved in DMAc and reacted at room temperature for 1 hour. Thereafter, 16.476 g of BPDA was further added thereto and dissolved in DMAc to react for 1 hour. Thereafter, 31.103 g of 6FDA was added thereto and reacted for 18 hours to obtain polyimide precursor solution.

### 2. Preparation of polyimide film

Using the above-mentioned polyimide precursor solution, a polyimide film was prepared in the same manner as in the comparative example 4. The film thickness of the obtained polyimide film was 25 µm.

### 3. Measurement of Physical Properties of Polyimide Film

When the haze value, total light transmittance, tensile strength, and glass transition temperature of the obtained polyimide film were measured in the same manner as in the working example 1, the haze value was 0.9%, the total light transmittance was 89.4%, the tensile strength was 126 MPa, the tensile elongation in a wet state with methyl ethyl ketone was 1.1%, and the glass transition temperature was 244°C. The tensile modulus measured simultaneously with the tensile strength was 3.2 GPa, and the tensile elongation was 5.1%. Furthermore, the b* value measured simultaneously with the haze value and the total light transmittance was 1.7 and the yellowness index was 3.1.

From the above results, it was revealed that the polyimide film obtained in this comparative example exhibits excellent transparency and strength equivalent to those of the conventional colorless and transparent polyimide film, but exhibits not only inferior heat resistance but also methyl ethyl ketone resistance equivalent to that of the conventional colorless and transparent polyimide film.

For reference, "Synthesis conditions of polyimide precursor solution and film thickness of polyimide film obtained from the polyimide precursor solution" and "physical properties of the polyimide film" in the above working examples and comparative examples are summarized in Tables 1 and 2 below, respectively. However, since the tetracarboxylic acid dianhydride of the comparative examples 4-7 was a three-component system and the space in the table could not be obtained, the "conditions for synthesizing the polyimide precursor solution and the film thickness of the polyimide film obtained from the polyimide precursor solution" in the comparative examples 4-7 were not listed in Table 1.

**[Table 1]**

| | Synthesis conditions of polyimide precursor solution | | | | | | | | | | Film thickness (µm) |
|---|---|---|---|---|---|---|---|---|---|---|---|
| | tetracarboxylic acid dianhydride | | | | diamine | | | | Solvent | Solid content (wt%) | |
| | First monomer | | Second monomer | | First monomer | | Second monomer | | | | |
| | Monomer Name | Molar fraction (mol%) | Monomer Name | Molar fraction (mol%) | Monomer Name | Molar fraction (mol%) | Monomer Name | Molar fraction (mol%) | | | |
| W. Ex. 1 | BPDA | 99 | BPADA | 1 | TFMB | 98 | 44DDS | 2 | DMAc | 20 | 25 |
| W. Ex. 2 | BPDA | 97.5 | BPADA | 2.5 | TFMB | 95 | 44DDS | 5 | DMAc | 20 | 25 |
| W. Ex. 3 | BPDA | 95 | BPADA | 5 | TFMB | 90 | 44DDS | 10 | DMAc | 20 | 25 |
| W. Ex. 4 | BPDA | 90 | BPADA | 10 | TFMB | 80 | 44DDS | 20 | DMAc | 20 | 25 |
| W. Ex. 5 | BPDA | 99 | BPADA | 1 | TFMB | 98 | 33DDS | 2 | DMAc | 20 | 25 |
| W. Ex. 6 | BPDA | 97.5 | BPADA | 2.5 | TFMB | 95 | 33DDS | 5 | DMAc | 20 | 25 |
| W. Ex. 7 | BPDA | 95 | BPADA | 5 | TFMB | 90 | 33DDS | 10 | DMAc | 20 | 25 |
| W. Ex. 8 | BPDA | 90 | BPADA | 10 | TFMB | 80 | 33DDS | 20 | DMAc | 20 | 25 |
| W. Ex. 9 | BPDA | 85 | BPADA | 15 | TFMB | 70 | 33DDS | 30 | DMAc | 20 | 24 |
| W. Ex. 10 | BPDA | 85 | ODPA | 15 | TFMB | 70 | 33DDS | 30 | DMAc | 20 | 24 |
| W. Ex. 11 | BPDA | 80 | BPADA | 20 | TFMB | 60 | 33DDS | 40 | DMAc | 20 | 25 |
| W. Ex. 12 | BPDA | 80 | ODPA | 20 | TFMB | 60 | 33DDS | 40 | DMAc | 20 | 24 |
| W. Ex. 13 | BPDA | 75 | BPADA | 25 | TFMB | 50 | 33DDS | 50 | DMAc | 20 | 24 |
| W. Ex. 14 | BPDA | 70 | BPADA | 30 | TFMB | 60 | 33DDS | 40 | DMAc | 20 | 25 |
| W. Ex.15 | BPDA | 70 | BPADA | 30 | TFMB | 40 | 33DDS | 60 | DMAc | 20 | 25 |
| W. Ex. 16 | BPDA | 95 | ODPA | 5 | TFMB | 90 | 44DDS | 10 | DMAc | 20 | 25 |
| C. Ex. 1 | BPDA | 100 | --- | --- | TFMB | 100 | --- | --- | DMAc | 20 | 25 |
| C. Ex. 2 | --- | --- | BPADA | 100 | TFMB | 100 | --- | --- | DMAc | 20 | 24 |
| C. Ex. 3 | BPDA | 100 | --- | --- | TFMB | 70 | 33DDS | 30 | DMAc | 20 | 24 |

**[Table 2]**

| | Tensile strength (MPa) | Tensile Modulus (GPa) | Tensile elongation (%) | Glass transition temperature (°C) | Haze (%) | Total light transmittance (%) | Yellowness | | Tensile elongation (MEK) (%) |
|---|---|---|---|---|---|---|---|---|---|
| | | | | | | | b* | YI | |
| W. Ex. 1 | 200 | 4.4 | 21.3 | 347 | 0.4 | 90.5 | 2.4 | 4.0 | 17.8 |
| W. Ex. 2 | 175 | 4.1 | 20.0 | 342 | 0.5 | 90.5 | 2.4 | 3.9 | 15.2 |
| W. Ex. 3 | 156 | 4.3 | 14.1 | 335 | 0.6 | 90.4 | 2.3 | 3.9 | 8.9 |
| W. Ex. 4 | 143 | 4.0 | 9.2 | 328 | 0.5 | 90.3 | 2.4 | 4.0 | 5.1 |
| W. Ex. 5 | 207 | 4.4 | 22.0 | 339 | 0.7 | 90.5 | 1.9 | 3.6 | 20.7 |
| W. Ex. 6 | 176 | 4.2 | 20.0 | 323 | 0.6 | 90.4 | 2.0 | 3.7 | 17.9 |
| W. Ex. 7 | 180 | 4.4 | 16.6 | 312 | 0.6 | 90.4 | 1.9 | 3.6 | 12.5 |
| W. Ex. 8 | 184 | 4.3 | 27.4 | 297 | 0.5 | 90.6 | 2.2 | 3.8 | 8.2 |
| W. Ex. 9 | 164 | 4.1 | 25.8 | 290 | 0.6 | 90.5 | 2.2 | 4.0 | 7.9 |
| W. Ex. 10 | 209 | 4.2 | 27.0 | 297 | 0.8 | 90.3 | 4.0 | 7.4 | 14.8 |
| W. Ex. 11 | 155 | 4.0 | 25.2 | 281 | 0.5 | 90.5 | 2.3 | 4.1 | 6.2 |
| W. Ex. 12 | 177 | 4.1 | 24.3 | 293 | 0.7 | 90.4 | 4.2 | 7.6 | 12.1 |
| W. Ex. 13 | 140 | 3.6 | 10.2 | 275 | 0.5 | 90.4 | 1.7 | 2.8 | 4.1 |
| W. Ex. 14 | 137 | 3.3 | 9.0 | 269 | 0.4 | 90.4 | 1.6 | 2.6 | 3.8 |
| W. Ex. 15 | 129 | 3.3 | 8.4 | 272 | 0.6 | 90.3 | 1.7 | 2.7 | 3.5 |
| W. Ex. 16 | 155 | 4.3 | 15.5 | 342 | 0.7 | 90.5 | 2.9 | 5.1 | 7.1 |
| C. Ex. 1 | 203 | 4.3 | 20.2 | 335 | 7.0 | 87.2 | 3.0 | 5.2 | 20.4 |
| C. Ex. 2 | 158 | 3.8 | 34.1 | 242 | 0.9 | 90.4 | 1.8 | 3.5 | 2.6 |
| C. Ex. 3 | 162 | 4.3 | 21.2 | 300 | 7.5 | 85.8 | 3.1 | 5.6 | 8.1 |
| C. Ex. 4 | 128 | 3.2 | 5.9 | 272 | 0.9 | 89.0 | 1.6 | 2.8 | 3.3 |
| C. Ex. 5 | 129 | 3.3 | 12.3 | 288 | 0.6 | 88.7 | 2.2 | 3.8 | 2.9 |
| C. Ex. 6 | 139 | 3.5 | 5.9 | 297 | 0.7 | 89.4 | 1.7 | 3.1 | 3.1 |
| C. Ex. 7 | 126 | 3.2 | 5.1 | 244 | 0.9 | 89.4 | 1.7 | 3.1 | 1.1 |

### [Industrial applicability]

The polyimide film according to the present invention exhibits excellent heat resistance, transparency, and strength equivalent to those of the conventional colorless and transparent polyimide film, but can be produced at a lower cost than the conventional colorless and transparent polyimide film, and has higher resistance to methyl ethyl ketone than the conventional colorless and transparent polyimide film, and can be suitably used for, for example, a circuit board for mounting a light emitting element, a cover lay, and a bar code printing board.

## Claims

1. A polyimide film formed from polyimide resin consisting of:
a site derived from biphenyltetracarboxylic acid-based compound (BPDA),
at least one site selected from the group consisting of a site derived from 2,2-bis[3,4-(dicarboxyphenoxy)phenyl]propane-based compound (BPADA) and a site derived from 4,4'-oxydiphthalate-based compound (ODPA),
a site derived from 2,2'-Bis(trifluoromethyl)benzidine (TFMB) and,
at least one site selected from the group consisting of a site derived from 3,3'-diaminodiphenylsulfone (3,3'-DDS) and a site derived from 4,4'-diaminodiphenylsulfone (4,4'-DDS),
wherein the haze value of the polyimide film is within the range of 0.1 or more and 2.0 or less.

2. The polyimide film according to Claim 1,
wherein the molar fraction of the site derived from biphenyltetracarboxylic acid compound (BPDA) with respect to all the sites derived from tetracarboxylic acid compound falls within the range of 70 mol% or more and 99 mol% or less.

3. The polyimide film according to Claim 1 or 2,
wherein the molar fraction of at least one site selected from the group consisting of the site derived from 2,2-bis[3,4-(dicarboxyphenoxy)phenyl]propane-based compound (BPADA) and the site derived from 4,4'-oxydiphthalate-based compound (ODPA) with respect to all sites derived from tetracarboxylic acid-based compounds falls within the range of 1 mol% to 30 mol%.

4. The polyimide film according to any one of claims 1 to 3,
wherein the molar fraction of the site derived from 2,2'-bis(trifluoromethyl)benzidine (TFMB) with respect to all sites derived from diamine falls within the range of 40 mol% or more and 98 mol% or less.

5. The polyimide film according to any one of claims 1 to 4,
wherein the molar fraction of at least one site selected from the group consisting of the site derived from 3,3'-diaminodiphenylsulfone (3,3'-DDS) and the site derived from 4,4'-diaminodiphenylsulfone (4,4'-DDS) with respect to all site derived from diamine falls within the range of 2 mol% or more and 60 mol% or less.

6. The polyimide film according to any one of claims 1 to 5,
wherein the tensile strength is within the range of 100 MPa or more and 500 MPa or less.

7. The polyimide film according to any one of claims 1 to 6,
wherein the glass transition temperature of the polyimide resin is in the range of 260°C or more and 350°C or less.

8. The polyimide film according to any one of claims 1 to 7,
wherein the tensile elongation when wetted with methyl ethyl ketone (MEK) on one side is within the range of 3.5% or more and 35% or less.

9. The polyimide film according to any one of claims 1 to 7, wherein the polyimide film is used as a circuit board for mounting a light emitting element, a cover lay, or a bar code printing board.

## Patentansprüche

1. Polyimidfolie, gebildet aus Polyimidharz, bestehend aus:
einer Stelle, die von einer Biphenyltetracarbonsäure-basierten (BPDA) abgeleitet ist,
mindestens einer Stelle ausgewählt aus der Gruppe bestehend aus einer Stelle, die von einer 2,2-Bis[3,4-(dicarboxyphenoxy)phenyl]propan-basierten Verbindung (BPADA) ableitet ist, und einer Stelle, die von einer 4,4'-Oxydiphthalat-basierten Verbindung (ODPA) ableitet ist,
einer Stelle, die von 2,2'-Bis(trifluormethyl)benzidin (TFMB) abgeleitet ist und,
mindestens einer Stelle ausgewählt aus der Gruppe bestehend aus einer Stelle, die von 3,3'-Diaminodiphenylsulfon (3,3'-DDS) ableitet ist, und einer Stelle, die von 4,4'-Diaminodiphenylsulfon (4,4'-DDS) ableitet ist,
wobei der Trübungswert der Polyimidfolie innerhalb des Bereichs von 0,1 oder mehr und 2,0 oder weniger liegt.

2. Polyimidfolie nach Anspruch 1,
wobei der molare Anteil der Stelle, die von der Biphenyltetracarbonsäureverbindung (BPDA) abgeleitet ist, in Bezug auf alle Stellen, die von der Tetracarbonsäureverbindung abgeleitet sind, in den Bereich von 70 Mol-% oder mehr und 99 Mol-% oder weniger fällt.

3. Polyimidfolie nach Anspruch 1 oder 2,
wobei der molare Anteil mindestens einer Stelle ausgewählt aus der Gruppe bestehend aus der Stelle, die von einer 2,2-Bis[3,4-(dicarboxyphenoxy)phenyl]propan-basierten Verbindung (BPADA) ableitet ist, und der Stelle, die von einer 4,4'-Oxydiphthalat-basierten Verbindung (ODPA) ableitet ist, in Bezug auf alle Stellen, die von Tetracarbonsäure-basierten Verbindungen ableitet sind, in den Bereich von 1 Mol-% bis 30 Mol-% fällt.

4. Polyimidfolie nach einem der Ansprüche 1 bis 3,
wobei der molare Anteil der Stelle, die von 2,2'-Bis(trifluormethyl)benzidin (TFMB) abgeleitet ist, in Bezug auf alle Stellen, die von Diamin abgeleitet sind, in den Bereich von 40 Mol-% oder mehr und 98 Mol-% oder weniger fällt.

5. Polyimidfolie nach einem der Ansprüche 1 bis 4,
wobei der molare Anteil mindestens einer Stelle ausgewählt aus der Gruppe bestehend aus der Stelle, die von 3,3'-Diaminodiphenylsulfon (3,3'-DDS) ableitet ist, und der Stelle, die von 4,4'-Diaminodiphenylsulfon (4,4'-DDS) ableitet ist, in Bezug auf alle Stellen, die von Diamin ableitet sind, in den Bereich von 2 Mol-% oder mehr und 60 Mol-% oder weniger fällt.

6. Polyimidfolie nach einem der Ansprüche 1 bis 5,
wobei die Zugfestigkeit innerhalb des Bereichs von 100 MPa oder mehr und 500 MPa oder weniger liegt.

7. Polyimidfolie nach einem der Ansprüche 1 bis 6,
wobei die Glasübergangstemperatur des Polyimidharzes im Bereich von 260°C oder mehr und 350°C oder weniger liegt.

8. Polyimidfolie nach einem der Ansprüche 1 bis 7,
wobei die Zugdehnung bei einseitiger Benetzung mit Methylethylketon (MEK) im Bereich von 3,5% oder mehr und 35% oder weniger liegt.

9. Polyimidfolie nach einem der Ansprüche 1 bis 7, wobei die Polyimidfolie als Leiterplatte zur Montage eines lichtemittierenden Elements, als Decklage oder als Barcode-Druckplatte verwendet wird.

## Revendications

1. Film de polyimide formé à partir d'une résine de polyimide constituée de :
un site issu d'un composé à base d'acide biphényltétracarboxylique (BPDA),
au moins un site choisi dans le groupe constitué par un site issu d'un composé à base de 2,2-bis[3,4-(dicarboxyphénoxy)phényl]propane (BPADA) et un site issu d'un composé à base de 4,4'-oxydiphtalate (ODPA),
un site issu de la 2,2'-bis(trifluorométhyl)benzidine (TFMB) et,
au moins un site choisi dans le groupe constitué par un site issu de la 3,3'-diaminodiphénylsulfone (3,3'-DDS) et un site issu de la 4,4'-diaminodiphénylsulfone (4,4'-DDS),
la valeur de trouble du film de polyimide étant dans la plage de 0,1 ou plus et 2,0 ou moins.

2. Film de polyimide selon la revendication 1,
la fraction molaire du site issu d'un composé d'acide biphényltétracarboxylique (BPDA) par rapport à tous les sites issus d'un composé d'acide tétracarboxylique tombant dans la plage de 70 % en moles ou plus et 99 % en moles ou moins.

3. Film de polyimide selon la revendication 1 ou 2,
la fraction molaire d'au moins un site choisi dans le groupe constitué par le site issu d'un composé à base de 2,2-bis[3,4-(dicarboxyphénoxy)phényl]propane (BPADA) et le site issu d'un composé à base de 4,4'-oxydiphtalate (ODPA) par rapport à tous les sites issus de composés à base d'acide tétracarboxylique tombant dans la plage de 1 % en moles à 30 % en moles.

4. Film de polyimide selon l'une quelconque des revendications 1 à 3,
la fraction molaire du site issu de la 2,2'-bis(trifluorométhyl)benzidine (TFMB) par rapport à tous les sites issus d'une diamine tombant dans la plage de 40 % en moles ou plus et 98 % en moles ou moins.

5. Film de polyimide selon l'une quelconque des revendications 1 à 4,
la fraction molaire d'au moins un site choisi dans le groupe constitué par le site issu de la 3,3'-diaminodiphénylsulfone (3,3'-DDS) et le site issu de la 4,4'-diaminodiphénylsulfone (4,4'-DDS) par rapport à tous les sites issus d'une diamine tombant dans la plage de 2 % en moles ou plus et 60 % en moles ou moins.

6. Film de polyimide selon l'une quelconque des revendications 1 à 5,
la résistance en traction étant dans la plage de 100 MPa ou plus et 500 MPa ou moins.

7. Film de polyimide selon l'une quelconque des revendications 1 à 6,
la température de transition vitreuse de la résine de polyimide étant dans la plage de 260 °C ou plus et 350 °C ou moins.

8. Film de polyimide selon l'une quelconque des revendications 1 à 7,
l'allongement en traction lorsqu'il est mouillé avec de la méthyléthylcétone (MEK) sur un côté étant dans la plage de 3,5 % ou plus et 35 % ou moins.

9. Film de polyimide selon l'une quelconque des revendications 1 à 7, le film de polyimide étant utilisé en tant que carte de circuit imprimé pour monter un élément émettant de la lumière, une couche de recouvrement, ou une carte d'impression de codes à barres.
